(19) Europäisches Patentamt

European Patent Office

Office européen des brevets

(11) **EP 2 910 981 A2**

(12) **EUROPEAN PATENT APPLICATION**

(43) Date of publication:
26.08.2015 Bulletin 2015/35

(51) Int Cl.:
*G01V 8/12* (2006.01)

(21) Application number: 14189867.6

(22) Date of filing: 22.10.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 23.02.2014 JP 2014032389

(71) Applicant: OMRON CORPORATION
Kyoto, Kyoto 600-8530 (JP)

(72) Inventors:
• **Okuno, Motoharu**
**Kyoto, Kyoto 600-8530 (JP)**
• **Imai, Kiyoshi**
**Kyoto, Kyoto 600-8530 (JP)**
• **Uemura, Kosuke**
**Kyoto, Kyoto 600-8530 (JP)**

(74) Representative: **Horn Kleimann Waitzhofer Patentanwälte PartG mbB Ganghoferstrasse 29a 80339 München (DE)**

(54) **PHOTOELECTRIC SENSOR WITH SENSITIVITY PARAMETER ADJUSTING MEANS**

(57)    Provided is a photoelectric sensor capable of easy adjustment for detecting the same detection object. A transmissive photoelectric sensor or a retro-reflective photoelectric sensor includes a light projecting unit, a light receiving unit, a determination unit, a target ratio setting unit, and a sensitivity parameter adjusting unit. The light projecting unit emits detection light for detecting a detection object that is present in a detection region is detected. The light receiving unit receives at least a portion of the detection light emitted by the light projecting means. The determination unit determines whether or not the detection object is present by comparing a received light signal value, which is a signal value of an output of the light receiving unit, with a threshold. The target ratio setting unit sets a target ratio. The sensitivity parameter adjusting unit adjusts a sensitivity parameter so that a ratio of the threshold to the received light signal value is the target ratio, when the detection object is not present in the detection region.

FIG. 1

**Description**

FIELD

The present invention relates to a photoelectric sensor.

BACKGROUND

A photoelectric sensor disclosed in JP 2002-171162A is an example of a conventional photoelectric sensor. In this photoelectric sensor, a sensitivity potentiometer (rotatable knob) adjusts a variable resistance for adjusting a gain of a received light signal.
JP 2002-171162A is an example of background art.

SUMMARY

Photoelectric sensors are typically used in factory lines, but in the factory lines, a plurality of photoelectric sensors may be arranged when a detection object is to be detected. When the detection object is transparent, the received light amount slightly differs between when the detection object is not present and when the detection object is present, but it is necessary to set a threshold between these received light amounts. In conventional photoelectric sensors, although either a gain or a threshold varies with a sensitivity potentiometer as disclosed in the invention according to JP 2002-171162A, there are individual differences between light projecting elements, light receiving elements, resistances, and the like of the photoelectric sensors. Accordingly, even if the sensitivity potentiometers of the plurality of photoelectric sensors are set to the same value, ratios between a received light signal value when a detection object is detected and a threshold are not necessarily identical, and an operator needs to adjust all the photoelectric sensors individually.
It is therefore an object of the present invention to provide a photoelectric sensor that enables easy adjustment of a ratio of a threshold to a received light signal value, in order to detect a detection object.
A photoelectric sensor according to a first aspect of the present invention is directed to a transmissive photoelectric sensor, or a retro-reflective photoelectric sensor for use in combination with a retro-reflective member, and includes light projecting means, light receiving means, determination means, target ratio setting means, and sensitivity parameter adjusting means. The light projecting means emits detection light for detecting a detection object that is present in a detection region. The light receiving means receives (either directly or after one or more reflections) at least a portion of the detection light emitted by the light projecting means. The determination means determines whether or not the detection object is present by comparing a received light signal value, which is an output signal value of the light receiving means, with a threshold. The target ratio setting means sets a target ratio. The sensitivity parameter adjusting means adjusts a sensitivity parameter so that a ratio of the threshold to the received light signal value is the target ratio when the detection object is not present in the detection region.
It is preferable that the target ratio be between 50% and 130%. It is further preferable that the target ratio be between 70% and 110%.
In the photoelectric sensor according to the present aspect, the sensitivity parameter is adjusted so that a ratio of the threshold to the received light signal value is the target ratio that was set by the target ratio setting means. With this, even if there is an individual difference between light projecting elements, light receiving elements, resistors, and the like of a plurality of photoelectric sensors, setting of sensitivity potentiometers to the same scale leads to the same ratios of the threshold to the received light signal value. Accordingly, the same ratios of the threshold to the received light signal value enables the same detection object to be detected with the same reliability. Accordingly, the photoelectric sensor according to the present aspect can mitigate the burden of the adjustment operation of the sensors that detect a detection object.
Furthermore, if the target ratios are the same, in the retro-reflective photoelectric sensors, received light signal values when a detection object is detected vary at the same ratio, even when distances between the retro-reflective member and the sensors are different. Alternatively, in the transmissive photoelectric sensors, the received light signal values when a detection object is detected vary at the same ratio, even when distances between a light projecting device and a light receiving device are different. Accordingly, by adjusting the target ratio of one sensor, it is possible to apply the same target ratio to the photoelectric sensors that detect the same detection object. Therefore, the photoelectric sensor according to the present aspect can mitigate the burden of the adjustment operation of the sensors that detect the same detection object.

BRIEF DESCRIPTION OF THE DRAWINGS

Fig. 1 is a diagram illustrating an overall configuration of a photoelectric sensor according to the present embodiment.

Fig. 2 is a diagram illustrating detailed configurations of light projecting means, light receiving means, a first adjustment unit, a second adjustment unit, determination means, and a storage unit.

Fig. 3 is a perspective view illustrating an outer appearance of the photoelectric sensor.

Fig. 4 is an enlarged view of an operation panel of the photoelectric sensor.

Fig. 5 is a diagram illustrating detailed configurations of an adjustment button, an indicator, the determination means, and sensitivity parameter adjusting means.

Fig. 6 is a flowchart illustrating a sensitivity adjustment operation of the photoelectric sensor according to the present embodiment.

Fig. 7 is a diagram illustrating an overall configuration of a photoelectric sensor according to a modification.

Fig. 8 is a flowchart illustrating a sensitivity adjustment operation of the photoelectric sensor according to the modification.

DETAILED DESCRIPTION

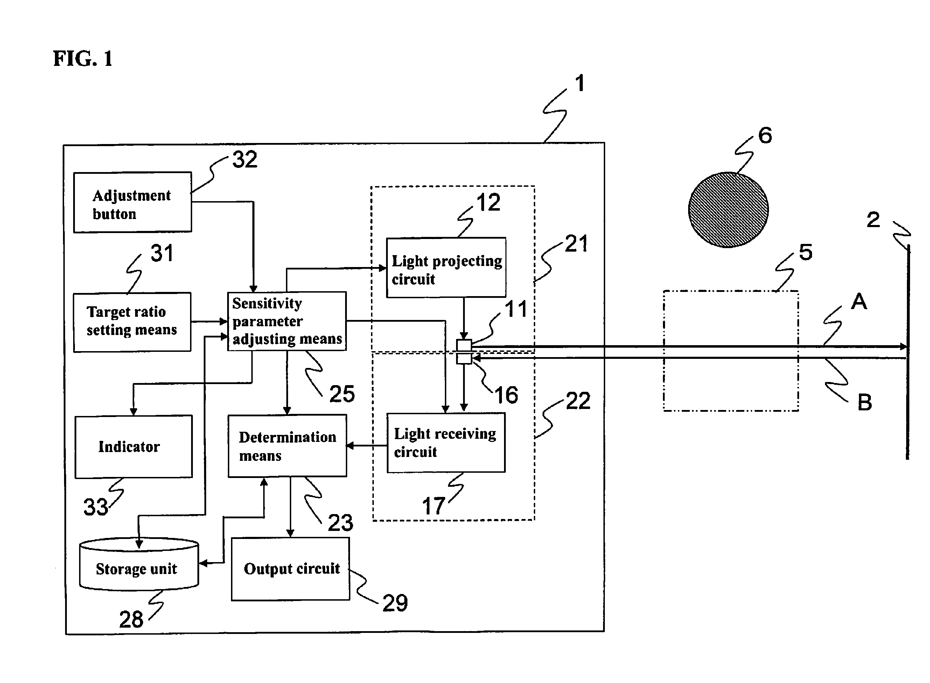

Hereinafter, a photoelectric sensor 1 according to an embodiment of the present invention will be described with reference to the drawings. The photoelectric sensor 1 is a retro-reflective photoelectric sensor for use in combination with a retro-reflective member 2. Fig. 1 is a diagram illustrating an overall configuration of the photoelectric sensor 1.

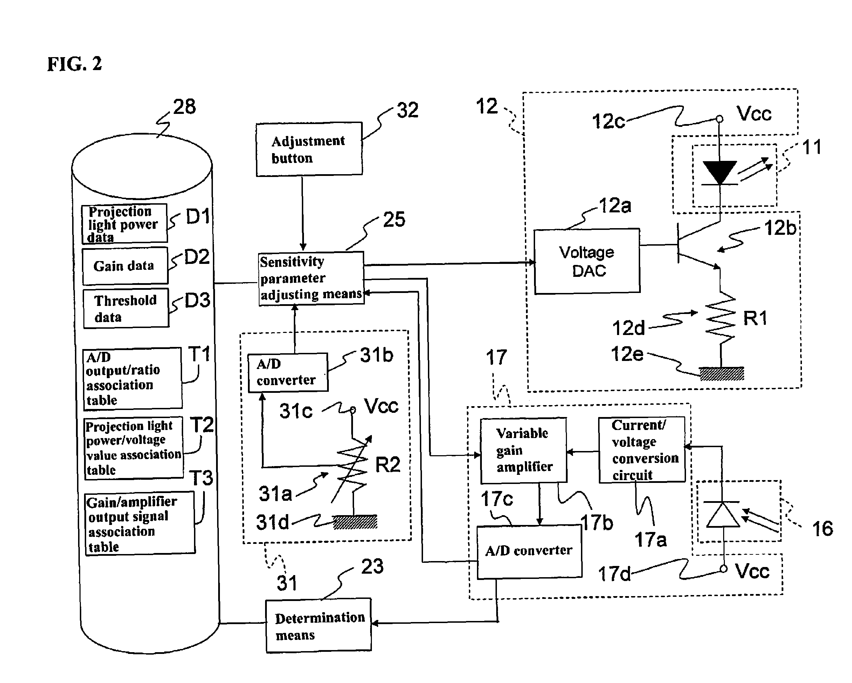

As shown in Fig. 1, the photoelectric sensor 1 includes light projecting means 21, light receiving means 22, determination means 23, sensitivity parameter adjusting means 25, a storage unit 28, an output circuit 29, target ratio setting means 31, an adjustment button 32, and an indicator 33. Fig. 2 is a diagram illustrating detailed configurations of the light projecting means 21, the light receiving means 22, a first adjustment unit 41, a second adjustment unit 42, the determination means 23, and the storage unit 28.

The light projecting means 21 emits detection light A for detecting a detection object 6 that is present in a detection region 5. As shown in Figs. 1 and 2, the light projecting means 21 includes a light projecting element 11 such as a light emitting diode for emitting the detection light A, and a light projecting circuit 12 for driving the light projecting element 11. As shown in Fig. 2, the light projecting circuit 12 includes a voltage output digital/analog converter (voltage DAC) 12a, a transistor 12b, a fixed power supply 12c (voltage value: Vcc), a resistor 12d, and a ground (GND) 12e. Fig. 2 shows the case where the light projecting element 11 is a light emitting diode. The anode of the light projecting element 11 is connected to the fixed power supply 12c. The cathode of the light projecting element 11 is connected to the collector of the transistor 12b. The voltage DAC 12a is connected to the base of the transistor 12b. One end of the resistor 12d for preventing an excess current is connected to the emitter of the transistor 12b. The other end of the resistor 12d is connected to the ground 12e. That is, the other end of the resistor 12d is earthed.

The voltage DAC 12a is connected to the sensitivity parameter adjusting means 25. The voltage DAC 12a receives an output voltage signal from the sensitivity parameter adjusting means 25, and outputs, to the base of the transistor 12b, a pulse voltage that includes a Hi voltage corresponding to the output voltage signal and a Lo voltage of 0V. The cycle of this pulse voltage may be a fixed value that is defined according to the product specification. Alternatively, it is also possible to make the cycle of the pulse voltage variable using separate adjustment means (not shown). If a Hi voltage has been applied from the voltage DAC 12a, a current flows from the fixed power supply 12c to the collector of the transistor 12b, and the light projecting element 11 emits light. The higher the Hi voltage is the higher the current will be, and thus power of light emitted from the light projecting element 11 increases.

The storage unit 28 has stored therein a projection light power/voltage value association table T2 in which a relationship between a magnitude of the Hi voltage and power of light (projection light power) emitted from the light projecting element 11 is recorded. The projection light power/voltage value association table T2 is created by, for example, a procedure with the following three steps:

(Step 1) A plurality of different discrete voltages are applied to the voltage DAC 12a in a state in which the light projecting means 21 is mounted on a substrate.

(Step 2) Light that is emitted by the light projecting element 11 when each of the plurality of different discrete voltages is applied, is measured by a photometer or a light detector.

(Step 3) Projection light power obtained from the measurement result is stored in the projection light power/voltage value association table T2 in association with the voltage applied to the voltage DAC 12a.

When adjusting projection light power, the sensitivity parameter adjusting means 25, which will be described later, calculates projection light power after adjustment and then references the projection light power/voltage value association table T2. Then, the sensitivity parameter adjusting means 25 outputs, to the voltage DAC 12a, an output voltage signal for letting the voltage DAC 12a output a voltage value that corresponds to the projection light power after adjustment. Note that, when the projection light power after adjustment does not correspond to any of the projection light power values stored in the projection light power/voltage value association table T2, it is also possible that the sensitivity parameter adjusting means 25 extracts a value stored in the projection light power/voltage value association table T2 that is approximate to the projection light power after adjustment, and calculates, using linear interpolation, a voltage value that corresponds to the projection light power after adjustment. Note that a method for calculating projection light power by the sensitivity parameter adjusting means 25 will be described later. With this, projection light intensity (projection light power) of the detection light A is adjusted.

Referring to Fig. 1, the retro-reflective member 2 is arranged facing the light projecting element 11, and the detection light A emitted from the light projecting element 11 is reflected on the retro-reflective member 2 and results in return light B. The detection light A is, for example, visible light but it only needs to be light that is returned by the retro-reflective member 2, and there is no particular limitation to its wavelength range. The retro-reflective member 2 includes a plurality of corner cubes. The incident light is reflected in the retro-reflective member 2, and then returned in the same direction as that of the incident light.

The light receiving means 22 receives the return light B. The light receiving means 22 includes a light receiving element 16 and a light receiving circuit 17. As shown in Figs. 1 and 2, the light receiving element 16 is, for example, a photodiode and varies an output signal according to the received light amount of the return light B. Fig. 2 shows the case where the light receiving element 16 is a photodiode. As shown in Fig. 2, the light receiving circuit 17 includes a current/voltage conversion circuit 17a, a variable gain amplifier 17b, an A/D converter 17c, and a fixed power supply 17d (voltage value: Vcc). Note that it is also possible that the fixed power supply 12c serves as the fixed power supply 17d. The anode of the light receiving element 16 is connected to the fixed power supply 17d. The cathode of the light receiving element 16 is connected to the current/voltage conversion circuit 17a. The light receiving element 16 outputs, to the current/voltage conversion circuit 17a, a photo current that corresponds to the intensity of the received return light B. The current/voltage conversion circuit 17a outputs, to the variable gain amplifier 17b, a voltage value that corresponds to the magnitude of the photo current. The variable gain amplifier 17b is connected to the sensitivity parameter adjusting means 25. The variable gain amplifier 17b receives an amplifier output signal from the sensitivity parameter adjusting means 25. A method for determining an amplifier output signal of the sensitivity parameter adjusting means 25 will be described later.

The variable gain amplifier 17b amplifies a voltage that is output from the current/voltage conversion circuit 17a with a gain that corresponds to the amplifier output signal, and outputs the amplified voltage to the A/D converter 17c. The gain of the variable gain amplifier 17b corresponds to the gain of the received light amount in the light receiving means 22. The storage unit 28 has stored therein a gain/amplifier output signal association table T3 in which a relationship between an amplifier output signal and a gain of the variable gain amplifier 17b is recorded. The gain/amplifier output signal association table T3 is created by, for example, obtaining amplifier output signals that correspond to a plurality of discrete gains based on the product specification of the variable gain amplifier 17b. The A/D converter 17c converts a voltage value from the variable gain amplifier 17b into a digital value, and outputs the digital value to the sensitivity parameter adjusting means 25 and the determination means 23. The sensitivity parameter adjusting means 25 and the determination means 23 receive the digital value from the A/D converter 17c as a received light signal value of the return light B.

The determination means 23 compares the received light signal value with a threshold that is stored in the storage unit 28 as threshold data D3, and determines whether or not the detection object 6 is present. Specifically, the received light signal value exceeds the threshold when the detection object 6 is not present in the detection region 5. However, the received light amount of the return light B decreases when the detection object 6 is present in the detection region 5, resulting in a reduction in the received light signal value. When the received light signal value is less than the threshold, the determination means 23 determines that the detection object 6 is present in the detection region 5. The threshold that is used by the determination means 23 is stored in the storage unit 28, which will be described later. Furthermore, the determination means 23 outputs the determination result as an indicator ON/OFF signal to the indicator 33. The output circuit 29 outputs the determination result obtained by the determination means 23 to an external device such as a controller of the photoelectric sensor 1 or a PC.

In the state in which the detection object 6 is not present in the detection region 5, the sensitivity parameter adjusting means 25 adjusts a sensitivity parameter so that a ratio of the threshold to the received light signal value is the target ratio set by the target ratio setting means 31. "Sensitivity parameter" refers to at least one of the projection light intensity (projection light power) of the detection light A, an amplification factor of the received light amount (gain of received light) of the light receiving means 22, and a threshold. The projection light power is stored in the storage unit 28 as projection light power data D1. The gain of received light is stored in the storage unit 28 as gain data D2. Furthermore, as described above, the threshold is stored in the storage unit 28 as the threshold data D3. When adjusting the sensitivity parameter, the sensitivity parameter adjusting means 25 reads at least one of the three pieces of data D1, D2, and D3 to adjust the at least one sensitivity parameter, and then rewrites the data that corresponds to the adjusted sensitivity parameter.

The sensitivity parameter adjusting means 25 receives a digital value from an A/D converter 31b, and references an A/D output/ratio association table T1 stored in the storage unit 28. The A/D output/ratio association table T1 has stored therein values of the ratio of the threshold to the received light signal value that correspond to the digital values from the A/D converter 31b. The sensitivity parameter adjusting means 25 acquires, from the A/D output/ratio association table T1, a ratio of the threshold to the received light signal value that corresponds to the digital value from the A/D converter 31b. Then, the sensitivity parameter adjusting means 25 adjusts the sensitivity parameter using the aquired ratio of the threshold to the received light signal value. The operation of the sensitivity parameter adjusting means 25 will be described in detail later.

Referring to Fig. 2, the storage unit 28 has stored the above-described projection light power data D1, the gain data D2, the threshold data D3, the A/D output/ratio association table T1, the projection light power/voltage value association table T2, and the gain/amplifier output signal association table T3. The storage unit 28 is realized by a memory such as a ROM or a RAM, a hard disk, or the like. The storage unit 28 has stored therein in advance defaults of projection light power, a gain of received light, and a threshold, as the projection light power data D1, the gain data D2, and the threshold data D3. The sensitivity parameter adjusting means 25 references and rewrites the stored defaults of the threshold and the sensitivity parameter.

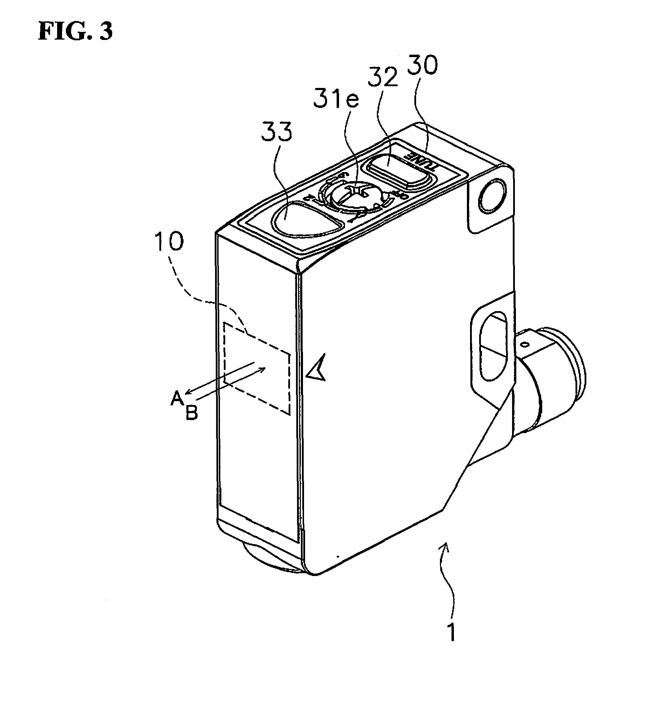

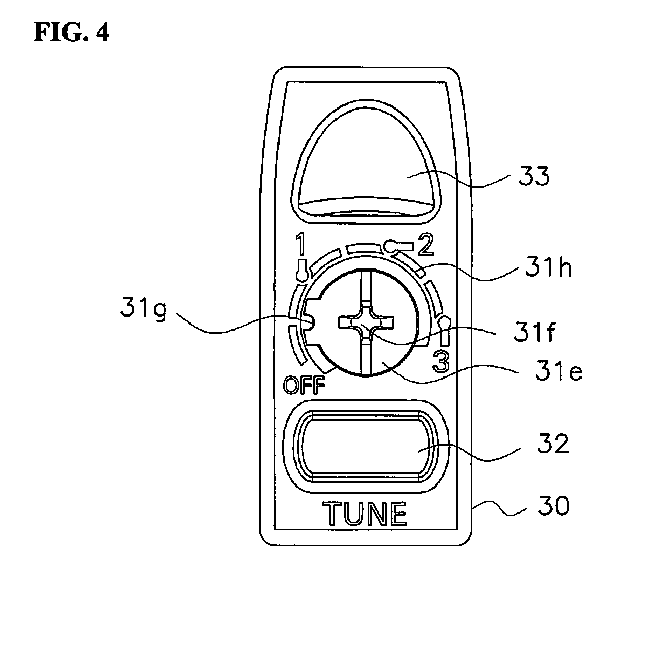

The target ratio setting means 31 sets the above-described target ratio. Fig. 3 is a perspective view illustrating an outer appearance of the photoelectric sensor 1 when seen from diagonally in front of a light projecting/receiving section 10 for projecting and receiving the detection light A and the return light B. Fig. 4 is an enlarged view of an operation panel 30 of the photoelectric sensor 1. Referring to Fig. 3, the operation panel 30 is provided on the upper surface of the photoelectric sensor 1. The target ratio setting means 31 includes an operation member 31e. The operation member 31e is provided near the center of the operation panel 30. The operation member 31e is a rotatable member in the shape of a dome that has a plus (+) slot 31f into which a Phillips head screwdriver can be inserted. As shown in Fig. 4, the operation member 31e has an indicating section 31g formed with a recess, and an operator can recognize an approximate target ratio based on the position of a scale 31h indicated by the indicating section 31g.

As shown in Fig. 2, the target ratio setting means 31 further includes a variable resistor 31a, the A/D converter 31b, a fixed power supply 31c (voltage value: Vcc), and a ground (GND) 31d. It is also possible that the fixed power supply 12c or 17d serves also as the fixed power supply 31c. Furthermore, it is also possible that the ground 12e serves also as the ground 31d. When the operation member 31e rotates, the variable resistor 31a shown in Fig. 2 varies according to the amount of the rotation. The variable resistor 31a is connected to the fixed power supply 31c and the ground 31d, and outputs a voltage value that varies with the variation of the resistance value of the variable resistor 31a to the A/D converter 31b. The A/D converter 31b converts the voltage value that was output from the variable resistor 31a into a digital value. The A/D converter 31b outputs this digital value to the first adjustment unit 41.

In the target ratio setting means 31, a setting range of the target ratio is defined so that the target ratio can be set in a range in which fine adjustment by the operator is possible. This setting range is, specifically, between 50% and 130%. One of typical detection objects that can be detected by the photoelectric sensor 1 according to the present embodiment is a transparent object. When this transparent object is defined as a detection target, several percent deviation in setting significantly affects the detection accuracy. Therefore, a very fine adjustment is needed. The inventors of the present invention found that adjustment for detection of a transparent object is possible when a range of 50% to 130% is assumed to be a setting range. Note that it is more preferable to set a range of 70% to 110% as the setting range because fine adjustment by the operator is easy. Note that, when the indicating section 31g indicates the position "OFF", this means that the target ratio is set to the minimum value in the setting range. Furthermore, when the indicating section 31g indicates the position "3", this means that the target ratio is set to the maximum value in the setting range. Note that the indication method of the indicating section 31g shown in Fig. 4 is merely an example, and it is also possible to indicate a specific setting range in percentage.

The A/D output/ratio association table T1 is created by, for example, a procedure with the following three steps:

(Step 1) A first digital value deg1 that is output by the A/D converter 31b when the operation member 31e is directed to one end of the scale 31h (for example, the position "OFF") is measured, and a target ratio that corresponds to the first digital value deg1 is defined as the minimum value Rmin in the setting range of the target ratio.

(Step 2) A second digital value deg2 that is output by the A/D converter 31b when the operation member 31e is directed to the other end of the scale 31h (for example, the position "3") is measured, and a target ratio that corresponds to the second digital value deg2 is defined as the maximum value Rmax in the setting range of the target ratio.

(Step 3) A target ratio R of a third digital value deg3 that is between the first digital value deg1 and the second digital value deg2 is determined by linear interpolation. That is, R is defined so that (deg3 - deg1):(deg2 - deg3) = (R - Rmin):(Rmax - R) is satisfied.

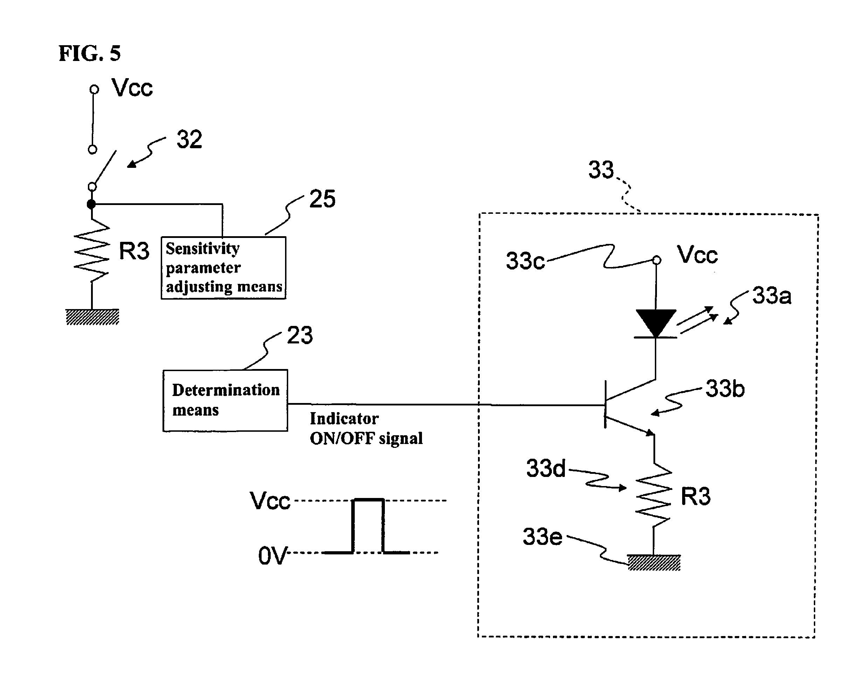

The adjustment button 32 is pressed by an operator when he or she starts adjustment by the sensitivity parameter adjusting means 25. As shown in Fig. 3, the adjustment button 32 is arranged at a position that is farther away from the light projecting/receiving section 10 than the target ratio setting means 31 is. Fig. 5 is a diagram illustrating detailed configurations of the adjustment button 32, the indicator 33, the determination means 23, and the sensitivity parameter adjusting means 25. As shown in Fig. 5, the adjustment button 32 is, for example, a so-called tact switch. When the adjustment button 23 has been pressed by an operator, a signal of a power supply voltage Vcc, for example, is output to the sensitivity parameter adjusting means 25. Upon input of the signal of the power supply voltage Vcc, the sensitivity parameter adjusting means 25 can determine that the adjustment button 32 has been pressed. When having determined that the adjustment button 32 was pressed, the sensitivity parameter adjusting means 25 executes a sensitivity parameter adjustment operation as will be described below.

Specifically, when the sensitivity parameter is projection light intensity of the detection light A, the sensitivity parameter adjusting means 25 calculates intensity (projection light power) of the detection light A after adjustment, and then determines, with reference to the projection light power/voltage value association table T2, a Hi voltage value of a pulse voltage that is to be applied to the base value of the transistor 12b from the voltage DAC 12a, the Hi voltage value corresponding to the projection light power after adjustment. Then, the sensitivity parameter adjusting means 25 outputs an output voltage signal that corresponds to the Hi voltage value to the voltage DAC 12a. Furthermore, the sensitivity parameter adjusting means 25 rewrites the projection light power data D1 stored in the storage unit 28. The light projecting circuit 12 changes the value of a current flowing through the light projecting element 11, based on the output voltage signal that was output from the sensitivity parameter adjusting means 25.

When the sensitivity parameter is a gain of a received light amount in the light receiving means 22, the sensitivity parameter adjusting means 25 calculates a gain of a received light amount after adjustment, then references the gain/amplifier output signal association table T3, and outputs an amplifier output signal that corresponds to the gain of the received light amount after adjustment to the variable gain amplifier 17b. Note that it is also possible that, if the gain of the received light amount after adjustment does not correspond to any of the gains values stored in the gain/amplifier output signal association table T3, the sensitivity parameter adjusting means 25 extracts a value stored in the gain/amplifier output signal association table T3 that is approximate to the gain of the received light amount after adjustment, and calculates, using linear interpolation, a voltage value that corresponds to the gain of the received light amount after adjustment. Furthermore, the sensitivity parameter adjusting means 25 rewrites the gain data D2 stored in the storage unit 28. The light receiving circuit 17 changes the amplification factor of an output signal from the light receiving element 16 based on the amplifier output signal that was output from the sensitivity parameter adjusting means 25, and thereby changes the gain of the received light amount.

If the sensitivity parameter is a threshold, the sensitivity parameter adjusting means 25 defines a threshold after adjustment, and rewrites the threshold data D3 stored in the storage unit 28 to the threshold after adjustment.

As shown in Fig. 5, the indicator 33 includes an operation indicating lamp 33a, a transistor 33b, a fixed power supply 33c, a resistor 33d, and a ground 33e. It is also possible that the fixed power supply 12c, 17d, or 31c serves also as the fixed power supply 33c. Furthermore, it is also possible that the ground 12e or 31d serves also as the ground 33e. As shown in Fig. 5, the operation indicating lamp 33a is, for example, a light emitting diode. The anode of the operation indicating lamp 33a is connected to the fixed power supply 12c. The cathode of the operation indicating lamp 33a is connected to the collector of the transistor 33b. The determination means 23 is connected to the base of the transistor 33b. One end of the resistor 33d for preventing an excess current is connected to the emitter of the transistor 12b. The other end of the resistor 33d is connected to the ground 33e. That is, the other end of the resistor 33d is earthed. The determination means 23 outputs, to the base of the transistor 33b, an indicator ON signal, which is a signal for turning ON the indicator in either case of when it is determined that the received light signal value is the threshold or greater, or when it is determined that the received light signal value is the threshold or lower.

Furthermore, the determination means 23 outputs, to the base of the transistor 33b, an indicator OFF signal, which is a signal for turning OFF the indicator in the other case of when it is determined that the received light signal value is the threshold or greater and when it is determined that the received light signal value is the threshold or lower. The operation indicating lamp 33a emits light when, for example, the indicator ON signal has a voltage of the power supply voltage Vcc and the voltage is applied to the base of the transistor. The operation indicating lamp 33a stops emitting light when, for example, the indicator OFF signal has a voltage of 0V and the voltage is applied to the base of the transistor.

As shown in Fig. 3, the indicator 33 is a mountain-shaped member that protrudes in the direction in which the detection light A travels. The indicator 33 is arranged at a position that is closer to the light projecting/receiving section 10 than the target ratio setting means 31 is. The target ratio setting means 31, the adjustment button 32, and the indicator 33 have the above-described positional relationship, and the indicator 33 is not easily hidden by the hand of an operator when the operator presses the adjustment button 32 because the operator ordinarily performs an adjustment operation while standing at a positon other than that in front of the light projecting/receiving section 10.

After having set a target ratio, the operator confirms that the operation indicating lamp is turned on in either case of when the detection object is present or when the detection object is not present, and that the operation indicating lamp is turned off in the other case. With this, it is possible for the operator to determine whether or not the target ratio set by the target ratio setting means 31 is an appropriate value.

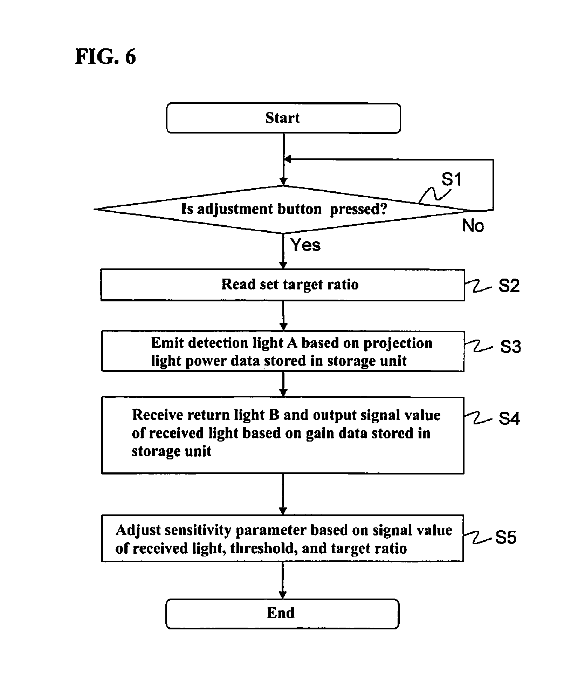

Hereinafter, a sensitivity adjustment operation of the photoelectric sensor 1 will be described in detail. Fig. 6 is a flowchart illustrating the sensitivity adjustment operation of the photoelectric sensor according to the present embodiment. First, the sensitivity parameter adjusting means 25 determines whether or not the adjustment button 32 has been pressed (step S1). If it is determined that the adjustment button 32 has not been pressed (No, in step S1), the sensitivity parameter adjusting means 25 stands by until the adjustment button is pressed (return to step S1).

If the adjustment button 32 has been pressed, the sensitivity parameter adjusting means 25 reads a target ratio Rtarget that is set by the target ratio setting means 31 using the above-described method (step S2). Then, the light projecting means 21 emits detection light A based on the projection light power stored as the projection light power data D1, by the sensitivity parameter adjusting means 25 outputting, to the voltage DAC 12a, an output voltage signal that corresponds to the projection light power (step S3). Then, the light receiving means 22 receives the return light B. The light receiving means 22 outputs a received light signal value Vcap based on the gain data D2 (step S4).

Ultimately in step S5, the sensitivity parameter adjusting means 25 adjusts the sensitivity parameter using the received light signal value Vcap, the threshold Vth, and the target ratio Rtarget. As described above, "sensitivity parameter" refers to at least one of the projection light intensity of the detection light A, the gain in the light receiving means 22, and the threshold Vth. Hereinafter, a method for adjusting each of the sensitivity parameters will be described.

When the projection light intensity of the detection light A is adjusted, a current value that is to be output from the light projecting circuit 12 to the light projecting element 11 is adjusted. For example, in step S3, it is assumed that Vhorg is a Hi voltage value of a voltage that is output from the light projecting circuit 12 to the light projecting element 11, and Vhdes is a Hi voltage value after adjustment, and Vhdes is defined such that the projection light power is (Vth/ (Rtarget * Vcap))-fold based on brightness-forward current characteristics of the light emitting diode. The projection light power/voltage value association table T2 has stored a relationship between the magnitude of a Hi voltage of the voltage DAC 12a, and power of light (projection light power) that is output from the light projecting element 11 based on the brightness-forward current characteristics. When having defined Vhdes, the sensitivity parameter adjusting means 25 rewrites the projection light power data D1 to Vhdes.

When the gain in the light receiving means 22 is adjusted, in step S4, Gdes is defined as Formula 1, where Gorg is a gain defined in the light receiving circuit 17, and Gdes is a gain after adjustment. When having defined Gdes, the sensitivity parameter adjusting means 25 rewrites the gain data D2 to Gdes.

$$Gdes = Gorg * Vth / (Rtarget * Vcap) \ldots (Formula\ 1)$$

At that time, it is assumed that the maximum value Vmax that the light receiving means 22 can output is the 16-bit maximum value (65535), and the threshold Vth is 40000. Furthermore, it is assumed that Rtarget is 105%, and Vcap is 20000 that is significantly lower than the threshold Vth. Furthermore, it is assumed that the light receiving circuit 17 has amplified a signal from the light receiving element 16 ten-fold with the default gain Gorg. At that time, the light receiving circuit 17 will amplify the signal from the light receiving element 16 about 19.05-fold with the gain Gdes after adjustment that is obtained by Formula 1.

When the threshold Vth is adjusted, it is assumed that Vth is a threshold before adjustment, and Vth_des is a threshold after adjustment. Vth_des is defined by Formula 3. When having defined Vth_des, the second adjustment unit 42 rewrites the threshold data D3 to Vth_des.

$$Vth\_des = Vcap * Rtarget \ldots (Formula\ 2)$$

Also at that time, it is assumed as described above that the maximum value Vmax that the light receiving means 22 can output is the 16-bit maximum value (65535), and the threshold Vth before adjustment is 40000. Furthermore, it is assumed that Rtarget is 105%, and Vcap is 20000 that is significantly lower than the threshold Vth. At that time, the threshold Vth_des after adjustment is 21000 based on Formula 2.

Sensitivity parameter adjustment may be such that the above-described Vth_des or only one sensitivity parameter may be adjusted based on either Formula 1 or Formula 2, but it may be adjusted together with a plurality of sensitivity parameters. The case in which Vth*(Rtarget*Vcap) = a and a received signal value is a-fold is taken as an example. At that time, it is assumed that Gdes/Gorg = x, Vth/Vth_des = y, and it is possible to define x and y so that x*y = a is satisfied and to define the corresponding Gdes, Vth_des. Furthermore, for example, the sensitivity parameter adjusting means 25 may first adjust the projection light power by obtaining a Hi voltage value that is closest to a value in which the projection light power is (Vth * (Rtarget*Vcap))-fold with reference to the projection light power/voltage value reference table T2. Then, the sensitivity parameter adjusting means 25 may also obtain a target received light signal value Vth/Rtarget by performing fine adjustment using the gain of received light.

Although the embodiment of the present invention has been described, the present invention is not limited to the foregoing embodiment, and various modifications are possible without departing from the spirit and scope of the present invention.

The present invention is also applicable to so-called coaxial retro-reflective photoelectric sensor that includes a lens for condensing detection light A in the detection region 5, in which the detection light A and return light B pass through the lens. In this case, a half mirror may also be provided between the lens and the light projecting element 11. Furthermore, a separate optical system for guiding light, such as a lens, a mirror, or a prism may also be provided between the half mirror and the light receiving element 16.

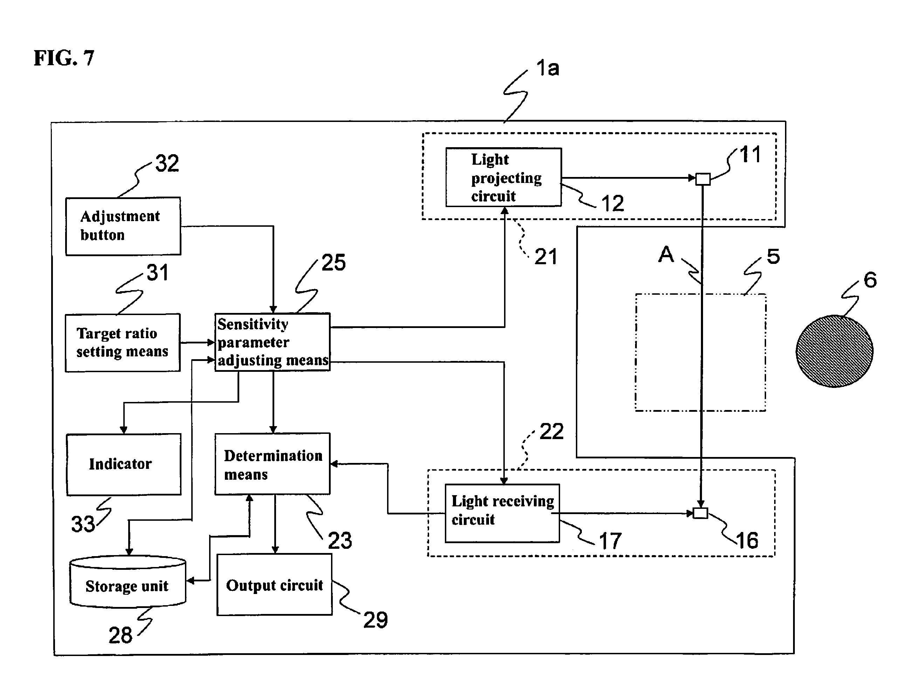

Moreover, the present invention is also applicable to a transmissive photoelectric sensor. Fig. 7 shows a modification 1a of the photoelectric sensor according to the present embodiment. In the present modification 1a, the transmissive photoelectric sensor in which a light projecting device and a light receiving device are integrated into one component, but the present invention is also applicable to a transmissive photoelectric sensor in which a light projecting device and a light receiving device are separated from each other. The photoelectric sensor 1a is not used in combination with the retro-reflective member 2. In the photoelectric sensor 1a, the light receiving means 22 directly receives detection light A that was emitted by the light projecting means 21 and passed through the detection region 5. Other configurations and operations of the photoelectric sensor 1a are the same as those of the photoelectric sensor 1. Furthermore, it is also possible that the photoelectric sensor 1a according to the modification is a fiber photoelectric sensor that further includes a light fiber for a transmission device that guides the detection light emitted from the light projecting element 11 to a predetermined position, and a light fiber for a light receiving device that receives light emitted from the light fiber for a transmission device and guides the received light to the light receiving element 16.

In Fig. 6, step S2 may be executed at any timing between steps S1 and S5.

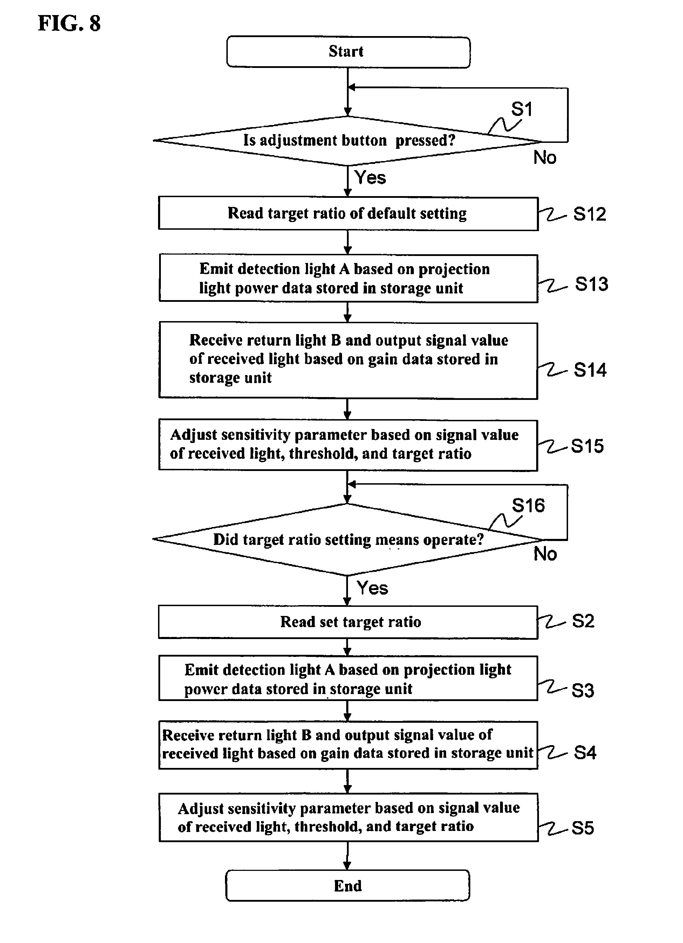

Furthermore, it is possible that the operation of the target ratio setting means 31 is performed after the adjustment button 32 has been pressed. Fig. 8 is a flowchart illustrating a sensitivity adjustment operation of the photoelectric sensor according to the modification. Here, the same reference numerals are added to the same operations as those in Fig. 6, and descriptions thereof are omitted.

In this operation, the target ratio setting means 31 indicates a predetermined initial position (for example, the positon "OFF" in Fig. 4 or the like). At that time, when the adjustment button 32 has been pressed (Yes, in step S1), the sensitivity parameter adjusting means 25 reads a default target ratio Rtarget-org using the above-described method (step S12). Then, the light projecting means 21 emits the detection light A based on projection light power data stored in advance in the storage unit 18 (step S13). Then, the light receiving means 22 receives the return light B. Then, the light receiving means 22 outputs a received light signal value Vcap based on the gain data stored in advance in the storage unit 18 (step S14). Then, the sensitivity parameter adjusting means 25 adjusts the sensitivity parameter based on the received light signal value Vcap, a threshold Vth-org that correspond to the threshold data D3 stored in advance in the storage unit 18, and the target ratio Rtarget-org (S15). The method for adjusting the sensitivity parameter is the same as that in step S5. Then, the sensitivity parameter adjusting means 25 detects whether or not the target ratio setting means 31 has been operated by an operator (step S16). If the target ratio setting means 31 has not been operated by an operator (No, in step S16), the sensitivity parameter adjusting means 25 stands by until the target ratio setting means 31 is operated by an operator. If the target ratio setting means 31 is operated by an operator (Yes, in step S16), steps S2 to S5 described in the above-described embodiment are executed.

The adjustment button 32 may be another operation member such as a switch. Furthermore, the adjustment button 32 may be omitted. In this case, the sensitivity parameter adjusting means 25 may be activated by, for example, an command from an external device that is connected to the outside of the photoelectric sensor 1 (for example, a PC or the like) so as to adjust the sensitivity parameter.

The indicator 33 may be omitted. Furthermore, it is also possible that the indicator 33 is not an indicating lamp, but another communication means such as sound notification means that notifies an operator of the state of the received light signal value or of whether or not the detection object 6 can be reliably detected. Furthermore, instead of turning on the light in a different color, the indicator 33 may also change the flashing speed, move, e.g., rotate a light emitting element, or display a message on a display screen so as to notify an operator of the state of the received light signal value or of whether or not the detection object 6 can reliably detected.

Note that all or part of the functional blocks (including, for example, the determination means 23 and the sensitivity parameter adjusting means 25) according to the above-described embodiments may be realized by a CPU interpreting and executing program data that is stored in a storage device (such as a ROM, a RAM, or a hard disk) and can execute the above-described procedures. In this case, the program data may be installed into the storage device via a recording medium or directly executed on the recording medium. Note that "recording medium" refers to a semiconductor memory such as a ROM, a RAM, or a flash memory, a magnetic disc memory such as a flexible disk or a hard disk, an optical disk memory such as a CD-ROM, a DVD, or a BD, a memory card, or the like. Furthermore, the recording medium is a concept that includes a communication medium, such as a telephone line or a carrier pass, as well.

Moreover, all or part of the functional blocks (including, for example, the determination means 23 and the sensitivity parameter adjusting means 25) according to the above-described embodiments may typically be realized as an integrated circuit LSI (referred to as an IC, a system LSI, a super LSI, or a ultra LSI, or the like, depending on the integration degree). All or part of the functional blocks may individually be formed as one chip, or formed so as to be included in one chip. Furthermore, a method for integrating circuits is not limited to a method of LSI, and may be realized by a method of a dedicated circuit or a general-purpose processor. Furthermore, a Field Programmable Gate Array (FPGA) that is programmable after manufacturing the LSI, or a reconfigurable processor that is a processor capable of reconfiguring connection or setting of circuit cells in the LSI circuit.

Industrial applicability

According to the present invention, it is possible to provide a photoelectric sensor that can easily adjust a ratio of a threshold to a received light signal value, in order to detect a detection object.

LIST OF REFERENCE NUMERALS

1      Photoelectric sensor
21     Light projecting means
22     Light receiving means
23     Determination means
25     Sensitivity parameter adjusting means
31     Target ratio setting means

**Claims**

1. A photoelectric sensor (1) that is a transmissive photoelectric sensor, or a retro-reflective photoelectric sensor for use in combination with a retro-reflective member (2), comprising:

   light projecting means (21) for emitting detection light for detecting a detection object (6) that is present in a detection region (5);
   light receiving means (22) for receiving at least a portion of the detection light emitted by the light projecting means (21);
   determination means (23) for determining whether or not the detection object (6) is present by comparing a received light signal value, which is an output signal value of the light receiving means (22), with a threshold;
   target ratio setting means (31) for setting a target ratio; and
   sensitivity parameter adjusting means (25) for adjusting a sensitivity parameter so that a ratio of the threshold to the received light signal value is equal to the target ratio when the detection object (6) is not present in the detection region.

2. The photoelectric sensor (1) according to claim 1, wherein the sensitivity parameter is a power of the light projected by the light projecting means (21).

3. The photoelectric sensor (1) according to claim 1 or 2, wherein the sensitivity parameter is a received light gain.

4. The photoelectric sensor (1) according to any one of claims 1 to 3, wherein the sensitivity parameter is the threshold.

5. The photoelectric sensor (1) according to any one of claims 1 to 4, wherein the target ratio is between 50% and 130%.

6. The photoelectric sensor (1) according to any one of claims 1 to 5, wherein the target ratio is between 70% and 110%.

7. The photoelectric sensor (1) according to any one of claims 1 to 6, wherein the target ratio setting means (31) includes an operation member (31e), and the operation member (31e) is a rotatable member.

## FIG. 1

EP 2 910 981 A2

# FIG. 2

**FIG. 3**

**FIG. 4**

**FIG. 5**

EP 2 910 981 A2

**FIG. 6**

```
                    ┌─────────────────────┐
                    │        Start         │
                    └─────────────────────┘
                              │
                              ▼               S1
              ◇─────────────────────────────◇
               Is adjustment button pressed?        No
              ◇─────────────────────────────◇
                              │ Yes
                              ▼
              ┌─────────────────────────────┐
              │     Read set target ratio    │  ～ S2
              └─────────────────────────────┘
                              │
                              ▼
              ┌─────────────────────────────┐
              │ Emit detection light A based on projection │  ～ S3
              │ light power data stored in storage unit    │
              └─────────────────────────────┘
                              │
                              ▼
              ┌─────────────────────────────┐
              │ Receive return light B and output signal value │  ～ S4
              │ of received light based on gain data stored in │
              │ storage unit                                   │
              └─────────────────────────────┘
                              │
                              ▼
              ┌─────────────────────────────┐
              │ Adjust sensitivity parameter based on signal value │  ～ S5
              │ of received light, threshold, and target ratio     │
              └─────────────────────────────┘
                              │
                              ▼
              ┌─────────────────────────────┐
              │            End               │
              └─────────────────────────────┘
```

EP 2 910 981 A2

**FIG. 7**

EP 2 910 981 A2

## FIG. 8

```
Start
  │
  ▼
◇ Is adjustment button pressed? ──No──┐ S1
  │ Yes                                │
  ▼                                    │
Read target ratio of default setting   │ S12
  │                                    │
  ▼                                    │
Emit detection light A based on        │ S13
projection light power data stored     │
in storage unit                        │
  │                                    │
  ▼                                    │
Receive return light B and output      │ S14
signal value of received light based   │
on gain data stored in storage unit    │
  │                                    │
  ▼                                    │
Adjust sensitivity parameter based     │ S15
on signal value of received light,     │
threshold, and target ratio            │
  │                                    │
  ▼                                    │
◇ Did target ratio setting means operate? ──No──┘ S16
  │ Yes
  ▼
Read set target ratio                    S2
  │
  ▼
Emit detection light A based on          S3
projection light power data stored
in storage unit
  │
  ▼
Receive return light B and output        S4
signal value of received light based
on gain data stored in storage unit
  │
  ▼
Adjust sensitivity parameter based       S5
on signal value of received light,
threshold, and target ratio
  │
  ▼
End
```

**EP 2 910 981 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002171162 A